# EUROPEAN PATENT APPLICATION

(11) **EP 3 127 891 A1**
(43) Date of publication of application: **08.02.2017**
(21) Application number: 14888391.1
(22) Date of filing: 27.05.2014
(51) Int. Cl.: C05F 5/00, A01P 3/00, A01P 5/00, A01P 21/00

(54) **EXTRACTS OF AGRICULTURAL HUSKS USED TO MODIFY THE METABOLISM OF PLANTS**

(30) Priority: 31.03.2014 MX 2014004327
(71) Applicant: Medina Esquer, Luis Román, 31375 Chihuahua, Chiuahua (MX)
(72) Inventor: Medina Esquer, Luis Román, 31375 Chihuahua, Chiuahua (MX)
(74) Representative: Carvajal y Urquijo, Isabel
(86) International application number: PCT/MX2014/000076
(87) International publication number: WO 2015/152702

(57) **Abstract**

The invention relates to a non-toxic composition prepared from agricultural waste, which includes the steps of: a) hydrolysing the plant matter in acidic conditions; b) nitrating the released phenolic compounds; c) stimulating the coupling between the phenolic compounds which are nitrated or not; d) insolubilising and separating the coupled compounds; and e) drying the precipitated insoluble solids. The resulting composition has phytoregulating properties due to which the application thereof to plants induces favorable metabolic and physiological changes which promote increases in the mass of the roots and the exudate, in the foliar area and mass, in the photosynthetic capacity, in the resistance to biotic factors, in the tolerance to abiotic stress factors and/or in the productivity of the crops.

## Description

### TECHNICAL FIELD OF INVENTION

The invention relates to an effective phytoregulating composition for crop treatment, containing as active ingredients, modified phenolic compounds obtained from agricultural waste. The composition may be administered through leaves or roots for its systemic distribution.

### BACKGROUND OF THE INVENTION

Plants synthesize endogenous growth regulators which essentially participate in their physiology whereby a number of current agricultural practices include the use of mostly synthetic compounds, with analogous properties to these regulators in order to increase the metabolism and thus increasing crop yield and/or fruit quality (Nickell, 1982: Plant growth regulators. Agricultural uses). Therefore, agrochemical manufacturers face a constant search of ways to obtain better compounds and methods to regulate plant metabolism.

Many growth regulators include compounds such as carboxylic acids, sugar analogues and amines having capacity to induce several effects in plants (Alexieva, 1994, Compt. Rend. Acad. Bulg. Sci. 47, 779-82). Treatments with polyhydroxycarboxylic acids in corn crop have demonstrated to increase root growth (Gur et al, 1987, Physiologia Plantarum. 69, 633-638) and formation of root hairs, favoring a better nutrient absorption. It is also known that in cotton plants treatments with carboxylic acids may induce carbohydrate synthesis (Gua et al, 1993, Beltwide Cotton Conference USA. 3, 1272-1280).

As to the amine phytoregulator potential, it is known that they affect the essential processes in plants such as flowering, germination, growth and senescence and the like in leaves. (Shih et al, 1982, I. Plant. Physiol. 70, 1592-1596). Interestingly, some studies have established that certain amines with regulating effect in plant growth may also affect phytopathogen fungi development and physiology (Havis et al, 1997, J. Agric. Food. Chem. 45, 2341-2344). Similarly, sugar analogues have benn reported to interfere in fungi growth, reducing damages that these may cause (El Gaouth et al, 1995, Plant. Dis. 79, 254-278).

Another type of molecules with phytoregulating capacity are nitrated derivatives of phenolic acids, particularly o-nitrophenolate, p-nitrophenolate and 5-nitroguayacolate (Górnik and Grzesik, 2005, Folia Horticulturae. 17, 119-127). Although these compounds also have capacity to affect the development of phytopathogen fungi, their use has been only restricted to phytoregulators for limiting their dose due to potential risks. (European Union Official Gazette, 19.2.2009, 48/5-48/12).

On the other hand, accumulation of phytoalexins or release of anticipins from their precursors is a usual response from plants before a biotic stress produced by pathogen microorganisms or mechanical damage produced by pest insects and mediated by endogenous or exogenous elicitors being compounds that stimulate any type of defense (Angelova et al, Biotechnol & Biotechnol Eq. 2/2006/20).

It has been reported that certain plant extracts comprising some of above described compounds may be effectively used as growth regulators in plants and enhancers of active compound assimilation. For example, Medina-Vega, US 5,352,264, discloses a process for hemicellulose hydrolysis of rice or oats husks, followed by resulting pentose oxidation to alcohols and polyhydroxycarboxylic acids and a method for using the resulting mixtures and their formulations as plant growth and fruit development regulators. In another application, Medina-Vega et al, US 5,525,576, describes the combined use of an assimilation agent basically formed by an oxidized extract of rice or oats husks, comprising a mixture of carbohydrates and polyhydroxycarboxylic acids and a plant growth regulating agent and/or systemic insecticide and/or fungicide. This combination increases assimilation of active ingredients allowing the use of lower doses.

On the other hand, Branly and Atkins, US 6,232,270 B1, describe a mixture of active ingredients effective for use in agriculture such as sodium o-nitrophenolate and p-nitrophenolate, sodium 5-nitroguayacolate and polyhydroxycarboxylic acids with 2, 4, 5 and 6 carbon atoms and an enhancer formed by spores or beneficial bacteria cultures. This mixture is useful in increasing the number of sites yielding a crop in cotton plants.

However, proliferation and indiscriminate use of synthetic phytoregulators has caused that agricultural regulations are obliged to restrict the use of chemicals which cause hormone alterations and malfunction in crops or that become toxic. Similarly, the intensive use of chemical pesticides for pest and disease control has led to causal organisms being developing resistance, requiring the use of doses becoming higher or to develop more toxic products. These aspects increase the risk level on ecosystem health and farmer and end consumer health.

Therefore, development of new non-toxic or low-toxicity phytoregulators is important, which promote temporary alterations in plant physiology directed to increase crop production through an improvement in root mass and rhizosphere health and/or increase in foliar mass and photosynthetic capacity and/or increase in tolerance to stress biotic and abiotic factor. Similarly, development of new products which also elicit or induce plant endogenous defenses in order to reduce the use of pesticides for pest and disease control is also important.

### SUMMARY OF INVENTION

In the light of above description and in order to provide a solution for the identified limitations, it is a general object of the invention to provide a composition and a method of use thereof as an effective phytoregulator.

It is a specific object of the invention to provide a composition and a method for effective use thereof as stimulant of plant root development and root exudate production.

It is another specific object of the invention to provide a composition and a method for effective use thereof as stimulant of rhizosphere colonization by beneficial microflora through an increase in root mass and root exudate production.

Another specific object of the invention is to provide a composition and a method to effectively increase plant tolerance to abiotic factors, through an increase of root mass and root exudate production favoring nutrient assimilation.

It is still another specific object of the invention to provide a composition and a method for effective use as stimulant of plant foliar development and an enhancer of photosynthetic capacity.

It is another specific object of the invention to provide a composition and a method for eliciting and stimulating plant endogenous defenses against the attack of pest insects, fungi or phytopathogen nematodes.

Another specific objective of the invention is to provide a composition and method for decreasing the use or the doses of chemical pesticides without losing its effectiveness as consequence from elicitation of plant endogenous defenses.

It is still another objective of the invention to provide a composition and a method effective for use wherein plants are developed in healthy manner.

Finally, it is another objective of the invention to provide a non-toxic or very low toxicity composition and an effective method to increase productivity in crops with an implicit reduction of risks associated to human and ecosystem exposure to pesticides or harmful phytoregulators.

### BRIEF DESCRIPTION OF FIGURES

The characteristic details of the invention are described in the paragraphs below together with the attached Figure, having the purpose of defining the invention but without limiting the scope thereof.

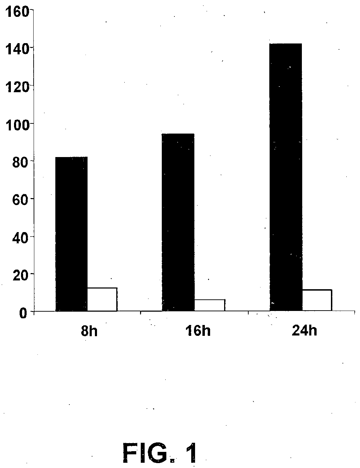

Figure 1 shows a gene differential expression of A. *thaliana,* compared to control, at 8h, 16h and 24h, when its roots are exposed to 10 µl/L of the phytoregulating composition in a microarray analysis. Black bars show the number of positively regulated genes while white bars show the number of negatively regulated genes.

### DETAILED DESCRIPTION OF THE INVENTION

### The effective composition

The present invention is related to an extremely useful composition for modulating plant physiology and metabolism through its phytoregulating action which is clearly demonstrated in Figure (1) referred to the results of a study on gene differential expression through microarrays. Such study used plants of *Arabídopsís thaliana,* a model organism used for plant physiology and biology studies, which root tissues were assessed after exposing the seedlings to the composition of present invention. A large amount of genes is noticed to be positively regulated and negatively in a lower rate related to control treatment.

The phytoregulating composition of present invention corresponds to an insoluble fraction under acidic conditions of an extract obtained from agricultural waste, particularly agricultural husks, preferably rice and/or oats husks. Said insoluble fraction constitutes from 3 to 30% of total extract (dry weight), preferably from 10 to 20% and being or not formed by modified products resulting from lignin hydrolysis and/or other phenolic compounds comprising plant cell wall, preferably rice and/or oats husks. Hydrolysis of wall cell and lignin for releasing all components forming the extract including the phenolic compounds responds to a suitable and accurate combination of pressure, temperature, pH and reaction times, using nitric acid to reduce pH at required levels. Nitric acid also serves as nitration agent of phenolic compounds, an essential aspect for modification of such compounds, Another key aspect in modification is coupling, still later, of monomeric units of phenolic compounds, whether or not modified during hydrolysis to produce dimers, trimers or oligomers. Chromatography and mass spectrometry analyses show with 90 to 100% certainty that the main monomeric units as basic composition constituents whether or not coupled, are: 2-(4-nitrophenoxy)ethanol; 2-hydroxy 5-nitrobenzaldehyde with its isomers; nitrobenzoic acid with its isomers; 3,5-dinitro-4-hydroxybenzaldehyde; 3,5-dinitrosalycylaldehyde; 3,5-dinitrobenzoic acid; 1,2-benzendicarboxylic acid butyl ester; bis(2-hydroxyphenyl)methanone; 2-amino 4-nitrobenzoic acid with its isomers; 3,5-dimethoxybenzoic acid; 2-hydroxysyringic acid; nitrated amine derived from syringic acid of general formula C₉H₁₀N₂O₆; and other more complex phenolic nature molecules responding to general formulas C₁₄H₁₉O₆N₂; C₁₈H₂₀N₂O₅ and C₂₂H₂₃NO₃. The coupling step becomes essential to modify phenolic fraction solubility, substantially increasing its phytoregulating efficiency and reducing a possible toxicity of some of its monomeric units. Said process is also performed under a suitable and accurate combination of pressure, temperature, pH and reaction times. Once the process is completed, the fraction of interest is separated from other extract constituents by a pH adjustment to cause flocculation and precipitation. The precipitate once separated from the aqueous fraction is dried for stabilization, forming a granular solid of blackish brown color which is the non-toxic or low-toxicity effective phytoregulating composition subject of present invention.

Studies conducted on toxicity and response of dermal and eye exposure to the composition of present invention show that it is a non-toxic or low-toxicity product not irritating the skin and moderately irritant to eyes. In contrast, pure nitrated phenolic compounds such as p-nitrofenol show toxicities up to 125 higher, measured as mean lethal concentration (CL50) over *Daphnia magna* or as concentration without observed effect (CSEO by its Spanish acronym). Likewise, other studies show that the composition of present invention is not toxic for aquatic fauna assessed over rainbow nor for beneficial fauna such as bees. These results demonstrate that the process as a whole allowing obtaining the composition of present invention becomes highly effective to obtain an innocuous product with biological activity as phytoregulator, as described below in different variants of the method for its use.

### Method of use

The effective composition of present invention may be in the physical form of a liquid, suspension, solid pellets, aggregates, compound aggregates (e.g., when active ingredients are formulated with a carrier or inert vehicle). Application of each physical form to the crops generally will proceed according to conventional techniques.

Solid forms of the effective composition may be mixed in solid or formed as aggregates with other adjuvants before their application. One or more adjuvants may be used to ease dispersion, solubilization, foliage adhesion, and the like.

For application, solid forms of the phytoregulating composition are firstly dissolved in a slightly alkaline aqueous media with pH adjustment from 7 to 10, preferably from 7.2 to 8.2, to prepare the mother solution. Said mother solution contains from 10 to 120 g of composition/L, preferably from 30 to 60 g of composition/L. For a proper and effective application in field, the mother solution or the liquid formulations with an equivalent content of active fraction are diluted in sufficient water volumes. Said application may be carried out both through leaves and through roots for systemic administration using the systems or equipment of common use for application of different pesticides, herbicides or other phytoregulators.

The specific dose of application may vary depending on the application method to plant surface or roots. For example, aerial spraying will use dilutions and volumes different to those applied with land sprayers, manual sprayers or by crop irrigation systems. If desired, the phytoregulating composition may be mixed with other treatments and simultaneously applied or may be applied in sequential steps.

For foliar applications, from 1 to 70 mL of mother solution are generally diluted in 1 L of water, preferably from 5 to 20 ml or the same volume of liquid formulations with an active fraction equivalent content. The diluted solution is applied in volumes comprising from 50 to 600 L/ha, preferably 100 to 400 L/ha, depending on the crop type and on the application method or system. For root application, from 0.5 to 30 ml of mother solution are generally diluted per L of water, preferably from 1 to 10 mL. The diluted solution is applied in volumes comprising from 50 to 600 L/ha, preferably 100 to 400 L/ha, depending on the crop type and irrigation system. General features of composition application in different crops are described in the following Table:

| Crops | Mode of Application | Dose | Frequency of application | Phenological Stage |
|---|---|---|---|---|
| Basic crops: Corn, Wheat, Rice, Barley, Oats, Rye, Beans, Soja, Sorghum, Chicken pea, Pea, Broad Bean. | To the root | 0.5 to 50 L/Ha | Weekly to Monthly | From before seeds are planted until beginning flowering |
| Basic crops: Corn, Wheat, Rice, Barley, Oats, Rye, Beans, Soja, Sorghum, Chicken pea, Pea, Broad Bean. | Foliar | 1 to 50 ml/L of spraying solution | Daily to every two weeks. | From emergence until harvesting. |
| Industrial crops: Cotton, Sugar Cane, Sugar Beet. | To the root | 0.5 to 50 L/Ha | Weekly to monthly | From before seeds are planted until ripening |
| Industrial crops: Cotton, Sugar Cane, Sugar Beet. | Foliar | 1 to 50 ml/L of spray solution. | Daily to every two weeks | From emergence until harvesting |
| Vegetables: Chili pepper, Tomato, Cucumber, Melon, Watermelon, Pumpkin, Onion, Lettuce, Cabbage, Broccoli, Garlic. | To the root | 0.5 to 50 L/Ha | Weekly to monthly | From before seeds are planted until harvesting |
| Vegetables: Chili pepper, Tomato, Cucumber, Melon, Watermelon, Pumpkin, Onion, Lettuce, Cabbage, Broccoli, Garlic. | Foliar | 1 to 50 ml/L of spray solution. | Daily to every two weeks | From emergence until harvesting |
| Fruits: Apple, Peach, Walnut, Grapevine, Berries, Avocado, Orange, Lemon, Tangerine, Grapefruit, Apricot, Cherry, Pear, Mango, Banana, Pineapple | To the roots | 0.5 to 50 L/Ha | Weekly to monthly | From nursery until fruit production |
| Fruits: Apple, Peach, Walnut, Grapevine, Berries, Avocado, Orange, Lemon, Tangerine, Grapefruit, Apricot, Cherry, Pear, Mango, Banana, Pineapple | Foliar | 1 to 50 ml/L of spray solution. | Daily to every two weeks | From nursery until fruit production |
| Ornamental and golf courses | To the root | 0.5 to 50 L/Ha | Weekly to monthly | From seeding until harvesting |
| Ornamental and golf courses | Foliar | 1 to 50 ml/L of spray solution. | Daily to every two weeks | From nursery until harvesting |

Specific doses, periods and frequencies of application shall depend on the concentration of active ingredients of the composition which are applied and therefore may be rapidly established by practice, being apparent for any one skilled in the art under present description.

### EXAMPLES OF INVENTION EMBODIMENTS

The invention will be now described regarding the following examples which are provided only for the purpose of representing a way of carrying out an implementation of the invention principles. The following examples are not intended to be an exhaustive representation of the invention nor they intent to limit the scope thereof.

### Example 1

A study was conducted to assess the effect of the composition over the expression of the whole genome in tissues of *Arabidopsis thaliana* root, using microarray technology. A 10 µL concentration of composition solution per liter was only used in the studies. 18-day old seedlings were applied with treatment and root tissues were collected at 3 different times (8h, 16h and 24h) after application. Seedlings without treatment were used as control.

94 genes (0.376%), 100 genes (0.400%) and 152 genes (0.608%) were respectively differentially expressed at 8, 16 and 24 hours (α ≤0.05). A larger number of genes which were positively regulated was observed, belonging to the category of "metabolism" and were expressed at the 3 assessed times. Interestingly, another important group of genes positively regulated corresponds to the category of "transcription" and those were mainly expressed at 8 and 16 hours and only a few at 24 h after treatment application. Transcriptional factors result key switches inducing a large variety of signals/routes therefore they finally result to be global regulators of biochemical routes. Another relevant issue of these studies was finding that genes related to photosynthesis and metabolism were positively regulated after 24 hours of treatment with the composition. Genes related with photosynthesis were the subunit I of photosystem reaction center, subunit II of the photosystem reaction center, bind protein A-B to chlorophyll, L13, S9, L18, 115, L5, I4, L31 ribosomal proteins, and the like. Similarly, other genes found associated to metabolism were P450s cytochrome which is involved in glucosinolate metabolism (and other secondary metabolite paths) and other genes related with phenylpropanoid and flavonoid metabolism.

By abundance in third and fourth place other positively regulated genes were observed at 3 times, and they were classified under "unknown" and "not classified function" categories.

Generally, only a minor gene fraction was observed to be negatively regulated.

### Example 2

The effect of composition over gene expression related to photosynthesis and secondary metabolism was assessed. The composition was applied at 2 different doses to a nutrient solution where *Arabidopsis thaliana* seedlings were grown. 18-day old seedling tissue was collected 24 h after treatment application. Selected genes related to photosynthesis are important in production of essential proteins for light energy collector complex. Dose A of composition positively affected PSII expression but negatively that of LHCAI. Dose B of composition favorably affected the expression of the three genes, especially LHCAI. These genes are related to secondary metabolism and have influence on glucosinolate biosynthesis (CYP79B3) and flavonoid glucoside biosynthesis (FSI, FSII, FSIII).

| **Treatment** | **Gene relative expression related to photosynthesis (% respect to control)** | | |
|---|---|---|---|
| | **PSI** | **PSII** | **LHCAI** |
| **Control** | 100 | 100 | 100 |
| **A Dose** | 100 | 110 | 90 |
| **B Dose** | 135 | 120 | 205 |

### Example 3

The effect of the composition on root phytochemical secretion, specifically non-polar compounds (hydrophobic) was determined using the *Arabidopsis thaliana* model plant. Secreted compounds were determined by HPLC-MS analysis. Based on results, each treatment was found to have effect on root phytochemical secretion compared to those control plants that were not elicited. The 18-day treatment using concentrations of 10 µl/L and 100 µl/L, significantly increased the total secondary metabolite secretion in root compared to control. Secretion of primary metabolites including sugars, amino acids and some organic acids through GC-MS analysis was also analyzed. 18-day treatment using 10 µL/L significantly increased silanol (antimicrobial compound) and apigenin (flavonoid) levels compared with untreated control. From identified compounds, the silanol compound possesses antimicrobial properties and apigenin glycoside is a flavonoid, related to beneficial bacteria attraction from *Rhizobium* genus, useful in nitrogen fixation. Other identified compounds in exudates are: 3,7,dioxy-2,8-disilanonan-5-one; indol-2(3H)one; galactose; anthracene-9-carboxylic acid; thiazole; pseudoheptulose; D-glycerol-D-galactopiranose; D-glycerol-D-glycoheptose; 2-o-glycerol-D-galactopiranose.

### Example 4

The effect of addition of a composition to a treatment with compost tea was evaluated over a microorganism population (bacteria and fungi), crop development and crop yield of bell pepper in greenhouse. Compost tea was applied at a 100 L/ha dose and treatment added with composition received 20 mL of composition/L of compost tea. Treatments were applied to transplant, in propagation and to vitality of first fruits. Addition of the composition was observed to enhance the response obtained in all assessed parameters.

| **Treatment** | **Assessed Parameters** | | | | | | |
|---|---|---|---|---|---|---|---|
| | **Bacteria (mg/g)** | | **Fungi (mg/g)** | | **Total plant dry weight** | **Number of fruits (No./VE)** | **Fruit weight (kg/VE)** |
| | **Actives** | **Total** | **Actives** | **total** | | | |
| **Control** | 7.4 b | 292 b | 0 b | 38.2 b | 55.6 b | 61 b | 7.3 b |
| **Compost tea** | 15.1 b | 310 b | 5.6 a | 34.4 b | 67.0 b | 70 b | 8.9 b |
| **Compost tea** + **composition** | 22.8 a | 346 a | 5.6 a | 59.7 a | 94.2 a | 92 a | 10.8 a |

Mean values in columns with the same letter do not show a significant difference (α≤0.05).

### Example 5

The effect of application of a single inoculant based on *Bradyrhizobium* and in combination with the composition was determined. Treatment was applied to the seed using a 3 mL per Kg dose of Bradyrhizobium seed and 6.25 ml per Kg of seed when used in combination with the composition. Aerial, root and total plant dry weight was determined and also the amount of present microorganisms by molecular biology techniques. No effect by single inoculant application with respect to control was observed; however, the addition of the composition to the inoculant increased in 16% the aerial biomass production, 8% root biomass and 13% total biomass. As to microorganism biomass, addition of the composition increased more than twice the fungi biomass related to treatment including only inoculant.

| **Treatment** | **Assessed parameters** | | | | |
|---|---|---|---|---|---|
| | **Plant biomass (g/plant)** | | | **Biomass** | |
| | **Aerial Root Total Bacteria Fungi** | **Root Total** | **Total** | **Bacteria** | **Fungi** |
| **Control** | 6.3 | 3.6 | 9.9 | 7.2 | 9.7 |
| ***Bradyrhizobium*** | 6.9 | 3.2 | 10.1 | 18 | 19 |
| ***Bradyrhizobium* + composition** | 7.3 | 3.9 | 11.2 | 21 | 41 |

### Example 6

The effect of *Paecilomyces lilacinus* application alone and in combination with the composition over *Meloydogine incógnita* phytopathogen nematode population in soil planted with tomato and over crop root development. The assay was carried out in greenhouse pots with innoculated soil 1000 nematode eggs per pot. *Paecilomyces lilacinus* inoculant was prepared at a 1 x 10⁸ conidia/ml concentration and applied 1 ml/pot in treatments; the composition was applied in 0.2 ml/L doses in irrigation water.

Control over the number of nodules and *Meloydogine incógnita* population (stage J2) on 25 and 45 days, after treatment application was identified. Addition of the composition was found to decrease the nematode population as well as the number of galls and healthy roots. Assays not shown suggest that the composition by itself does not show a nematicide effect therefore the observed result is attributed to elicitation of defense systems in seedlings and/or an increase in root biomass and/or exudation which in turn promotes development of beneficial microflora, limiting development of nematodes.

| **Treatments** | **Assessed parameters** | | | |
|---|---|---|---|---|
| | **Population of J2 (No./100cc of soil)** | | **Number of galls per plant** | **Number of healthy roots** |
| | **25 days after application** | **45 days after application** | | |
| **1** | 0 c | 0 b | 0 c | 346 a |
| **2** | 18.6 a | 62.4 a | 105.6 a | 87 d |
| **3** | 5.6 b | 1.8 b | 26.2 b | 98 c |
| **4** | 1.6 c | 2.6 b | 29.4 b | 233 b |

1) Control crop without inoculation with *M. incógnita* and without *P*. *lilacinus;* 2) Control crop inoculated with *M. incógnita* and without *P*. *lilacinus;* 3) Inoculated with *M. incógnita* and with *P*. *lilacinus;* 4) Inoculated with *M. incognita,* with *P*. *lilacinus* and with composition.
   - Mean values in columns with the same letter do not show a significant difference (α≤0.05).

### Example 7

In order to determine the effect on corn crops (DAS 2382 hybrid), 4 L/ha of the composition and a control were applied performing two applications, the first being one week after starting seeding and the other before crop closing. Application to foliage was carried out using precision equipment with regulated constant pressure and pressurized with CO₂. Each experimental unit corresponded to three furrows per 3.5 m. Plant population per hectare was estimated in 92,000 units, with manually performed seeding depositing two seeds per blow in order to assure germination. One control was used, applying water instead of the composition. Production was 11.82 ton/ha with control and 13.97 ton/ha with composition, representing a statistically significant increase (α≤0.05) of 18%.

### Example 8

In order to determine the effect on beans crop under rain-fed conditions, 3 L/ha of the composition and one control were applied over crops with variety Flor de Junio-Marcela. Application to foliage was carried out using precision equipment with regulated constant pressure and pressurized with CO₂. Each experimental unit corresponded to three furrows per 8 m. Plant density per hectare was estimated in 83,000 units, with furrows at a distance of 0.75 m. Useful unit at the time of estimating the harvest was 1 furrow per 5 m, at a distance between furrow of 0.75 (21.6 m²). One control was used, applying water instead of the composition. Production was 2.5 ton/ha with control and 2.9 ton/ha with composition, representing a statistically significant increase (α≤0.05) of 16%.

### Example 9

In order to assess the composition effect over tomato seedlings 20 pots were used per treatment. Three applications were made to the root, three foliar and one combining both. The first application to the root was made to the transplant. Foliar applications started when plants had two fully expanded true leaves. Applications were made weekly in both cases with equivalents proportional to 1 L/ha foliar and 2 L/ha in soil. Assessments were carried out on first crop stages, one week after the last application for the vegetative variables. Photosynthetic efficiency quantification was carried out on first and fifth day after the last soil application. A control was used, applying water instead of the composition. An increase in variables connected with vegetative development of plants treated with the composition compared to control was noticed. Similarly, an improvement in photosynthetic efficiency of the plant was noticed measured as a larger capacity of photon collection in those treated with the composition.

| **Treatment** | **Vegetative development** | | **Photosynthesis** | |
|---|---|---|---|---|
| | **Dry weight (g)** | **Foliar area (cm²)** | **Assessment (uEem⁻²s⁻¹)** | |
| | | | **Day 1** | **Day 5** |
| **Control** | 34 b | 434.4 b | 11.0 b | 16.3 b |
| **Composition** | 40.9 a | 505.6 a | 11.9 a | 18.2 a |

Mean values in columns with the same letter do not show a significant difference (α≤0.05).

### Example 10

In order to assess the effect of composition on greenhouse soybean plants, 20 pots were used per treatment. Three applications were made to the root, three foliar and a combination thereof. The first application on the root was made on the transplant. Foliar applications started when plants had two fully expanded true leaves. Applications were made weekly in both cases with equivalents proportional to 2 L/ha foliar and 4 L/ha in soil. Assessments were made on first crop stages one week after the last application for vegetative variables. In case of photosynthetic efficiency quantification this was carried out on the seventh day after the last application to the soil. One control was used applying water instead of the composition. A statistically significant increase was observed (α≤0.05) in variables related with vegetative development of plants treated with the compositions in relation to those of control. Similarly, an improvement in photosynthetic efficiency of the plant was noticed measured as a larger capacity of photon collection in those treated with the composition.

| **Treatment** | **Vegetative development** | **Photosynthesis** |
|---|---|---|
| | **Foliar area (cm²)** | **Assessment (uEem⁻²s^{- 1})** |
| | | **Day 7** |
| **Control** | 224.0 b | 9.9 b |
| **Composition** | 278.4 a | 14.0 a |

Mean values in columns with the same letter do not show a significant difference (α≤0.05).

### Example 11

The effect of the composition on whitefly (*Bemisia tabaci*) control was assessed over a greenhouse strawberry crop being in the phenological stage of flowering, vitality and fruit development. The experimental unit included three furrows of 5.0 m each, with a separation of 1 m, therefore the total surface of each treatment was 60.0 m². Three treatments were carried out: the first corresponding to the absolute control where water was used; the second corresponding to a positive control where a commercial chemical insecticide was used at a dose of 1.0 L/ha and a third treatment where the composition was used at a dose of 2.0 L/ha. Two treatment applications were made at intervals of 7 days, with assessments on three and five days after starting application. The second application was assessed at 3, 5 and 7 days after making the same. Before treatment application, as in every assessment date, the number of whitefly nymphs and adults were counted in leaves randomly taken from five plants located at the central furrow central of the experimental plot and transported in boxes with ice. Counts were made under a stereoscopic microscope. The composition was noticed to have the best effectiveness for whitefly nymph control compared to control and to chemical control. In case of adults, the biological effectiveness of the composition was similar to the composition but higher than the control.

| **Development stage** | **Biological effectiveness percentage** | | |
|---|---|---|---|
| | **Control** | **Chemical control** | **Composition** |
| **Nymphs** | 0.0 c | 64.27 b | 81.05 a |
| **Adults** | 0.0 b | 70.69 a | 72.79 a |

Means in rows with the same letter do not show a significant difference (α≤0.05).

### Example 12

Biological effectiveness of the composition on fleahopper (*Paratrioza cockerelli*) was assessed at Bunker hybrid cucumber plantations with drip irrigation systems with plant cover. The experimental plot was formed by three furrows with 5 m length and 1.8 m separation (27.0 m²). The useful plot consisted of the 5.0-m length central furrow central, with a total 108.0 m² surface for each treatment. Two applications with five-day intervals were made at a concentration of 1 L/ha of chemical control, a low dose of composition (1 L/ha), a mean dose of composition (2.0 L/ha) and a high dose of composition (3.0 L/ha). Water was used as absolute control. The number of fleahopper nymphs found in 10 leaves randomly collected from the central furrow of each experimental plot was considered for assessing biological effectiveness. Sampling was made on day one, three and five after the first application, as well as on day three, five and seven after the second application. A dose dependent effect was found with significant statistical differences (α≤0.05). Higher values of effectiveness percentage were obtained by using a high dose and in the second application, higher than chemical control and control.

| **Application** | **Biological effectiveness percentage (%)** | | | | |
|---|---|---|---|---|---|
| | **Low dose** | **Mean dose** | **High dose** | **Chemical control** | **Control (water)** |
| **1** | 5.9 c | 19.2 a | 31.3 ab | 25.3 a | 0.0 c |
| **2** | 35.7 c | 54.1 bc | 61.2 ab | 79.6 a | 0.0 d |

Means in rows with the same letter do not show a significant difference (α≤0.05).

### Example 13

Biological effectiveness of the composition over trips control in onion crops was determined, with a sowing density of 5 cm between bulbs on double row, with gravity irrigation. Experimental plot size was 4 furrows 0.7 m wide per 5.0 meters long re4sulting a 14.0 m² surface. A CO₂ backpack with two-nozzle rods, Yamaho KS-A5 type was used and operated at 60 PSI. At the beginning of applications the crop was in vegetative growth stage and starting bulb development (27 days after transplant).

A single application was made at a low dose of composition (1 L/ha), a mean dose of composition (2.0 L/ha) and a high dose of composition (3.0 L/ha). Water was used as control. In order to assess biological effectiveness the trips density was evaluated by randomly selecting five plants in the central furrow of the experimental plot. The shoot was directly observed on each plant to account for the number of trips, using a magnifying glass (20X magnification). A previous sampling to treatment application was also conducted. Assessments were carried out at 3, 7 and 10 days after treatment application. All used concentrations were found effective for trips control, without statistical difference among them but being different to control.

| **Days after application** | **Biological effectiveness percentage (%)** | | | |
|---|---|---|---|---|
| | **Low dose** | **Mean dose** | **High dose** | **Control** |
| **7** | 67.57 a | 75.64 a | 78.18 a | 0.0 b |

Means with the same letter do not show a significant difference (α≤0.05).

### Example 14

Biological effectiveness of the composition over white mite control in chili pepper crops, Anaheim type Sahuaro variety was determined with a sowing density of 5 plants per meter of furrow. Sowing bed width was 1.8 meters and transplanted on double row with gravity irrigation. Experimental plot size was 3 furrows, 1.8 meter width per 5.0 meter long and resulting a 27.0 m² surface. At commencement of application, chili pepper plants were in vegetative growth stage (16 days after transplant). A single application was made on vegetative growth phenological stage when mites were not present or a colonization thereof was started instead, at low dose of composition (1 L/ha), a mean dose of composition (2.0 L/ha) and a high dose of composition (3.0 L/ha). Water was used as control. A sample size of 5 well-formed leaves located at the end section of selected plants was defined to evaluate biological effectiveness. Plants were randomly selected at the central furrow of the experimental plot. Selected leaves were placed in brown paper bags, identified and placed in a row for transportation to the laboratory. The number of mites present per sampling unit was counted at the laboratory using a stereoscopic microscope. A previous sampling to treatment application was carried out. Assessments to determine treatment effect were carried out at 3, 7 and 10 days after treatment application. All used concentrations were found effective for white mite control without statistical difference among them, but strongly different to control.

| **Days after application** | **Biological effectiveness percentage (%)** | | | |
|---|---|---|---|---|
| | **Low dose** | **Mean dose** | **High dose** | **Control** |
| **7** | 65.49 a | 70.71 a | 74.69 a | 0 b |

Means with the same letter do not show a significant difference (α≤0.05).

### Example 15

Biological effectiveness of the composition over Hairy mildew and Powdery mildew control in tomato crops (phonological stage of flowering, vitality and fruit development) in greenhouse was observed. The plot included three rows of 10.0 m each with a separation of 0.90 m. The plants were sprayed with the composition at a dose of 2.0 mL/L. Water was used as control. Foliar applications were carried out at weekly intervals. The assessment was determined as percentage of incidence (%), and registration started from symptom appearance until plant death in positive control, conducting a weekly registration with an arbitrary scale. The assay showed a decrease in incidence values for both types of mildew when the composition was used.

| **Mildew type** | **Incidence percentage (%)** | |
|---|---|---|
| | **Composition** | **Control** |
| **Hairy mildew** | 30.2 | 59.4 |
| **Powdery mildew** | 20.5 | 33.6 |

### Example 16

Protection offered by the composition in plants exposed to saline stress was observed through an assay with pepper bell seedlings, cultivar "Jupiter". These seedlings were placed in germination plates with peat-moss as substrate and kept during a 40-day period and then transferred to 5-L pots. Adaptation period before treatment commencement consisted of daily irrigation during 10 days reaching saturation by a nutrient formulation based on 100-50-100 N-P-K at 1 mg/L concentrations. Used treatments in the assay were prepared in 100 L containers where NaCl was added until reaching a concentration of 25 mM/L, plus nutrients based on Hoagland formula (50% of its concentration). Irrigation frequency with this nutrient solution was every day, applying a 350 cm³ volume per plant during the whole assay. Composition application was carried out once per week at a dose of 0.6 mL per plant per day. Based on a daily irrigation volume of 350 mL/plant, weekly application of the composition was 0.6 cm³ per 7 days in 350 cm³ of irrigation water per plant. Results indicated that plants were severely damaged by saline solutions. The component of number of leaves per plant was reduced by about 27% in treatment with 25 mM NaCl; however, under composition application the plants were not affected by saline stress regarding this variable. As to the foliar area, saline stress did not cause changes in respect of control but the treatment including the composition showed a remarkable increase of this variable, of at least 18%.

| **Variable** | **Treatments** | | |
|---|---|---|---|
| | **25 mM NaCl + Composition** | **25 mM NaCl** | **Control (water)** |
| **Leaves per plant** | 70 | 50 | 70 |
| **Foliar area (cm²/plant)** | 1300 | 1050 | 1100 |

### Example 17

Composition evaluations in tomato plants (Calima hybrid Santa Clara type) transplanted from greenhouse to open field conditions were carried out at a distance of 1.1 m between furrows and 30 cm between plants. The composition was applied on leaves over the plants at 25 days after transplant (5 days before application of Metribuzin X herbicide) at a dose of 2 L/ha. A second application was made with the same features 35 days after treatment (5 days after herbicide application). Application was carried out in located form on plant base with flat fan nozzle. Plants treated only with herbicide (1 L/ha) and without herbicide nor with composition were used as controls. Application of the composition in control plants and in those treated with herbicide increased the foliar area values indicating a positive effect of composition in collecting light in plants with low or null stress level. A gradual recovery of plants when treated with composition was observed from 45 days after herbicide application until reaching values similar to control on days 45 and 60. These results show the positive effect of the composition in root formation, mitigating the loss generated by herbicide in amino acid biosynthesis.

### Example 18

The study was carried out to determine composition toxicity on *Daphnia magna* in a 48-h static test. Test concentrations were determined through a range test. Concentrations used for the definitive test were 62.5, 125, 250, 500 and 1000 mg/L, administered to the system, *Daphnia magna,* in fresh water. Three copies of 10 organisms were used for each concentration test. Control containers were used, placing 10 daphnides in fresh water without the composition. Dissolved oxygen, temperature, conductivity and pH were assessed at the beginning of the test and after each dose. Observations for immobility were made daily in a test chamber. The test ended after 48 ± 1 hour of exposure. The concentration without observed effect (CSEO) of the composition was 250 mg/L and CE₅₀ (Mean Effective Concentration) was determined higher than 1000 mg/L.

### Example 19

In order to determine the composition toxicity on rainbow trout, *Oncorhynchus mykkis,* 96-hour static tests were carried out without water exchange. Test concentrations were determined through a range test, showing a CL₅₀ > 1000 mg/l, being used as limit value for definite tests. Three copies of 10 organisms were used for each test. A control group comprising thirty organisms was not exposed to the composition. Dissolved oxygen, temperature, conductivity and pH were assessed for each dose and daily until experiment completion. Mortality observations were carried out at 6, 24, 48, 72 and 96 hours after treatment. The test was determined after 96 ± 1 hour of exposure. Mean lethal concentration (CL₅₀) was established in concentrations higher than 1000 mg/L. Concentration without observed effect (CSEO) of the composition was determined in values lower than 1000 mg/L.

### Example 20

A study of dermal acute toxicity was conducted on albino rats using the composition. Three males and three females were selected for the assay. Exposure areas were treated with 5000 mg/kg wetting with 1.0 mL of deionized water/g composition and were wrapped to keep the substance in contact with skin during 24 hours. Mortality was not observed during the study. Mean acute lethal dose (DL₅₀) indicated by data was 5000 mg/kg when applied to intact skin in albino rats.

### Example 21

An eye irritation assay was conducted in three albino rabbits in order to determine composition toxicity. 100 mg of the composition were placed without dilution in the conjunctival sac of each animal right eye selected for testing. All treated eyes were washed with deionized water for one minute after conducting observations at 24 hours. Based on maximum irritation value of 36.7, obtained 1 hour after dosage, the composition is classified as moderately irritant. Conjunctive irritation was observed and positive corneal only 1 hour after exposure.

After reading and understanding the preceding detailed description of a non-toxic composition, prepared from agricultural waste and a method for use; several advantages offered by said composition and said method may be appreciated in the preferred embodiments of the invention for the objects which were created.

Without intending to express all the relevant aspects of the invention, the following advantages may be mentioned:
- The raw material for preparation of the composition subject of present invention is agricultural waste, preferably rice and/or oats husks, thus the whole process recycles byproducts usually of low commercial value by providing them an added value.
- The composition according to the process developed for its preparation comprises analogous compounds to other natural compounds with biological activities already described and acting as phytoregulators.
- The composition according to the process developed for its preparation, results in a very low toxicity or low risk product for human health and ecosystems unlike other phytoregulators containing some pure phenolic compounds.
- The composition has phytoregulating properties clearly demonstrated in preceding examples and causing favorable metabolic and physiological changes.
- One of the effects of said composition is an increase in root exudates which promote development of beneficial microflora which in turn prevents and attack of pathogen agents, improves nutrient assimilation and tolerance to stress abiotic factors.
- Another effect of said compositions is elicitation or induction of defense systems in plants which confer resistance to attack from pest insects, fungi and phytopathogen nematodes. Thus, it is possible to decrease use frequency and/or chemical pesticide doses without losing effectiveness, then having a favorable effect on human health and ecosystems. The composition did not show to have significant insecticide, fungicide or nematicide properties therefore its action is just attribute to elicitation of defense mechanisms.
- The combination of different effects caused by the composition of present invention together promotes a healthy development in crops and/or an increase in yield thereof.

Based on above described embodiments, it is considered that modifications to disclosed embodiment environments or their configurations, as well as alternative embodiment environments or their configurations will be considered apparent for any one skilled in the art under the present description. Therefore, claims are considered to include such modifications and alternatives when being within the scope of present invention or its equivalent.

## Claims

1. A non-toxic composition prepared from agricultural waste, **characterized in that** comprises a mixture of nitrated derivatives of lignin constituents or from other phenolic compounds or phenolic compounds being part of plant cell wall.

2. A non-toxic composition prepared from agricultural waste according to claim 1, wherein the nitrated derivatives of lignin constituents or from other phenolic compounds or phenolic compounds comprise monomers, dimers, trimers or oligomers in different combinations of at least some of the following monomeric units:

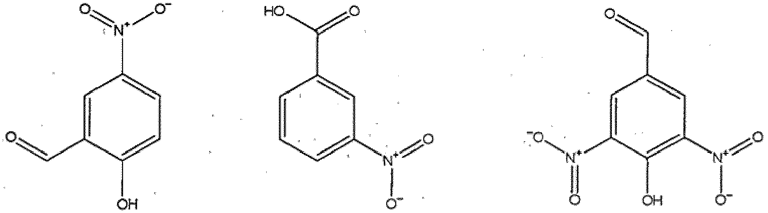

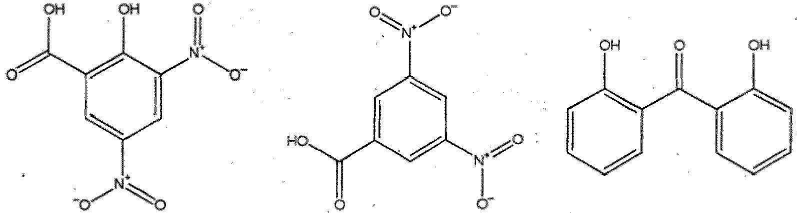

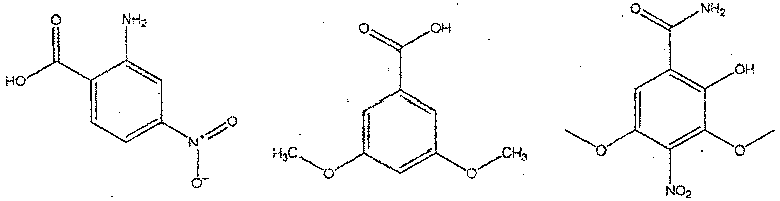

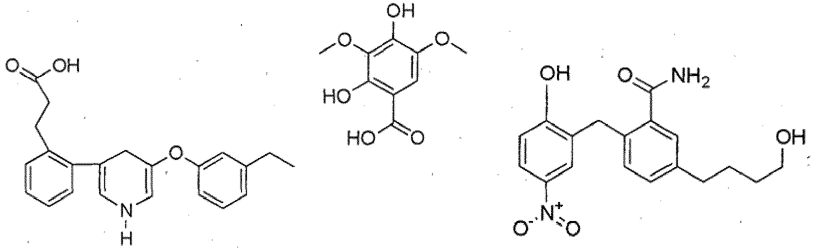

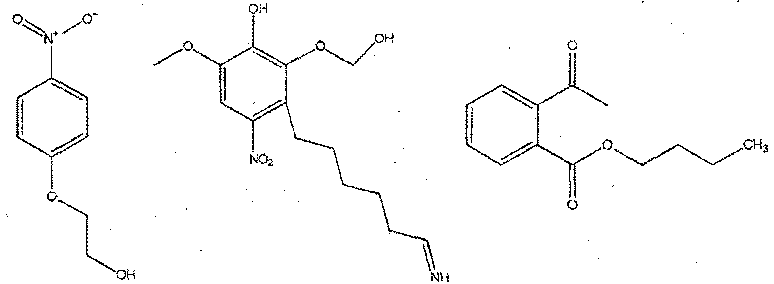

3. A non-toxic composition prepared from agricultural waste according to claim 1, wherein said preparation includes the steps of:
(a) performing an agricultural waste acidic extraction,
(b) nitrating phenolic compounds released during step (a),
(c) stimulating the coupling between the nitrated compounds resulting from step (b) and those resulting from step (a) which were not nitrated for dimer, trimer or oligomer formation.
(d) insolubilizing, flocculating and precipitating the compounds resulting from step (c) to separate them from sugars, other carbohydrates or other non-phenolic compounds resulting from step (a); and
(e) drying the insoluble solids, precipitated in step (d).

4. A non-toxic composition, prepared from agricultural waste according to claim 3, wherein the agricultural waste is agricultural husks, preferably rice and/or oats husks.

5. A non-toxic composition, prepared from agricultural waste according to claim 1, wherein the acid used for hydrolysis and as nitration agent is nitric acid.

6. A non-toxic composition, prepared from agricultural waste according to claim 1, **characterized in that** comprises the following physical forms:
(a) granular solid.
(b) solid aggregate with inert vehicles.
(c) solid aggregate with adjuvants.
(d) homogeneous solution.
(e) suspension.

7. A method for providing a phytoregulating effect in plants by modifying their gene expression and being **characterized by** application in the foliar and/or root area for its systemic distribution, of an aqueous solution or suspension of a product comprising the non-toxic composition according to claim 1.

8. A method for inducing favorable metabolic and physiologic changes in plants and being **characterized by** application in the foliar and/or root area for its systemic distribution of an aqueous solution or suspension of a product comprising the non-toxic composition according to claim 1.

9. A method for increasing root mass in plants and being **characterized by** application in the foliar and/or root area for its systemic distribution of an aqueous solution or suspension of a product comprising the non-toxic composition according to claim 1.

10. A method for providing an increase in root exudation in plants and being **characterized by** application in the foliar and/or root area for its systemic distribution of an aqueous solution or suspension of a product comprising the non-toxic composition according to claim 1.

11. A method for providing an increase in foliar mass and/or area in plants root exudation in plants and being **characterized by** application in the foliar and/or root area for its systemic distribution of an aqueous solution or suspension of a product comprising the non-toxic composition according to claim 1.

12. A method for providing an increase in photosynthesis capacity in plants and being **characterized by** application in the foliar and/or root area for its systemic distribution of an aqueous solution or suspension of a product comprising the non-toxic composition according to claim 1.

13. A method for providing an increase in resistance to pest insect attack in plants and being **characterized by** application in the foliar and/or root area for its systemic distribution of an aqueous solution or suspension of a product comprising the non-toxic composition according to claim 1.

14. A method for providing an increase in resistance to phytopathogen nematode attack in plants and being **characterized by** application in the foliar and/or root area for its systemic distribution of an aqueous solution or suspension of a product comprising the non-toxic composition according to claim 1.

15. A method for providing an increase in resistance to phytopathogen fungi attack in plants and being **characterized by** application in the foliar and/or root area for its systemic distribution of an aqueous solution or suspension of a product comprising the non-toxic composition according to claim 1.

16. A method for providing an increase in resistance to abiotic stress factors, particularly hydric or saline stress in plants and being **characterized by** application in the foliar and/or root area for its systemic distribution of an aqueous solution or suspension of a product comprising the non-toxic composition according to claim 1.

17. A method for providing an increase in crop yield and being **characterized by** application in the foliar and/or root area for its systemic distribution of an aqueous solution or suspension of a product comprising the non-toxic composition according to claim 1.
